# EUROPÄISCHE PATENTSCHRIFT

(11) **EP 2 148 099 B1**
(45) Veröffentlichungstag und Bekanntmachung des Hinweises auf die Patenterteilung: **02.09.2015**
(21) Anmeldenummer: 09165118.2
(22) Anmeldetag: 10.07.2009
(51) Int. Cl.: F16B 13/02, F16B 13/14

(54) **Verankerungselement**
Anchoring element
Élément d'ancrage

(30) Priorität: 24.07.2008 DE 102008040687
(43) Veröffentlichungstag der Anmeldung: 27.01.2010
(73) Patentinhaber: HILTI Aktiengesellschaft, 9494 Schaan (LI)
(72) Erfinder: Bianchi, Pietro, 9473 Gams (CH); Tognini, Roger, 9435 Heerbrugg (CH); Sander, Bernhard, 81379 München (DE); Lutz, Clemens, 9470 Buchs (CH); Appl, Jörg, 9470 Buchs (CH)
(74) Vertreter: Hilti Aktiengesellschaft Corporate Intellectual Property

(56) Entgegenhaltungen:
- DE-A1- 4 403 131
- DE-A1- 19 720 579

## Beschreibung

Die Erfindung betrifft ein Verankerungselement zur Anordnung an einem Schaft eines Befestigungselementes, insbesondere nach dem Oberbegriff des Anspruchs 1. Ein solches Verankerungselement ist aus der DE 197 20 579 A1 bekannt. Weiter betrifft die Erfindung eine mittels einer aushärtbaren Masse in einem Bohrloch verankerbare Befestigungsvorrichtung, die ein Befestigungselement und zumindest ein Verankerungselement aufweist, sowie eine Befestigungsanordnung mit einer derartigen Befestigungsvorrichtung.

Es ist bekannt, Befestigungselemente mittels einer aushärtbaren Masse, welche vor dem Einführen oder nach dem Einführen des Befestigungselementes in das Bohrloch in dieses eingebracht wird, chemisch im Bohrloch zu verankern. Das Befestigungselement ist beispielsweise eine Gewindestange, die über ihre gesamte Längserstreckung mit einem Gewinde als Aussenprofilierung versehen ist. Wird dieses Befestigungselement chemisch verankert, kann das Versagen des Befestigungspunktes entlang des Kontaktbereichs zwischen dem Schaft und der ausgehärteten Masse oder aber entlang des Kontaktbereichs zwischen der Bohrlochwandung und der ausgehärteten Masse auftreten.

Durch Reinigung des Bohrlochs und insbesondere der Bohrlochwandung kann die Haftung der ausgehärteten Masse an der Bohrlochwandung und somit die Verankerung des Befestigungselementes im Bohrloch verbessert werden. Die Reinigung des Bohrlochs stellt einen zusätzlichen Arbeitsaufwand dar, welcher zudem für ein vorteilhaftes Ergebnis separate Hilfsmittel erfordert, die dem Anwender nicht immer zur Verfügung stehen.

Aus der DE 40 10 051 C1 ist ein mittels einer aushärtbaren Masse in einem Bohrloch verankerbares Befestigungselement bekannt, das einen Schaft sowie ein hülsenförmiges, drehfest mit dem Schaft verbundenes Reinigungselement mit Öffnungen aufweist. Beim Eindrehen des Befestigungselementes in das Bohrloch wird das Bohrloch an mehreren Stellen gereinigt. Gleichzeitig wird eine allenfalls zuvor in das Bohrloch eingebrachte aushärtbare Masse beim Einführen des Befestigungselementes durchmischt.

Nachteilig an der bekannten Lösung ist, dass das gesetzte Befestigungselement erst nach dem Aushärten der aushärtbaren Masse belastbar ist und für die Reinigung der Wandung des Bohrlochs das Reinigungselement drehend in das Bohrloch eingeführt werden muss. Für die erforderliche drehfeste Verbindung des Reinigungselementes am Schaft muss dieses aufwändig mit separaten Mitteln am Schaft festgelegt werden.

Aus der US 1,688,087 A1 ist ein mittels einer aushärtbaren Masse in einem Bohrloch verankerbares Befestigungselement bekannt, das einen Schaft mit einem Gewinde als Aussenprofilierung sowie mehrere ringscheibenförmige Verankerungselemente mit jeweils einer Durchführöffnung für den Schaft und mit jeweils einem Aussendurchmesser aufweist, der grösser als der Nenndurchmesser des Bohrlochs ist. Das Befestigungselement wird als Ganzes, d. h. mit den am Schaft angeordneten Verankerungselementen, in das Bohrloch eingeführt. Die Verankerungselemente schaffen eine mechanische Verankerung des Befestigungselementes im Bohrloch bis die beispielsweise vor oder nach dem Einführen des Befestigungselementes eingebrachte aushärtbare Masse für eine Verankerung des Befestigungselements im Bohrloch ausreichend ausgehärtet ist.

Nachteilig an der bekannten Lösung ist, dass bei einem mit einer Aussenprofilierung versehenen Schafts die ringscheibenförmigen Verankerungselemente im angeordneten Zustand leicht zu einer in Bezug auf die Schaftlängsachse senkrechte Ebene geneigt sind, weshalb der aus dem Bohrloch ragende Schaftabschnitt nach dem Setzen des Befestigungselements nicht senkrecht von der Oberfläche des Bauteils abragt. Eine nachträgliche Justierung des Schafts ist, wenn überhaupt, nur bedingt möglich, da diese entgegen einer von den Verankerungselementen erzeugten Gegenkraft erfolgt. Des Weiteren müssen für eine den Anforderungen einer chemischen Verankerung genügende Reinigung der Wandung des Bohrlochs sowie für eine ausreichende Verankerung des Befestigungselementes im Bohrloch eine ausreichende Anzahl von Verankerungselementen vorgesehen werden, welche einzeln und somit aufwändig zu montieren sind.

Aufgabe der Erfindung ist es, einerseits ein Verankerungselement zu schaffen, das bei Gewährleistung der unterschiedlichen Erfordernisse den Setzaufwand eines Befestigungselementes reduziert und dabei einfach an einem Schaft auch mit einer Aussenprofilierung montierbar ist. Ferner soll eine chemisch verankerbare Befestigungsvorrichtung mit zumindest einem Verankerungselement sowie eine Befestigungsanordnung mit einer derartigen Befestigungsvorrichtung geschaffen werden, bei denen der Setzaufwand reduziert ist.

Diese Aufgabe ist für ein Verankerungselement, für ein Befestigungselement und für eine Befestigungsanordnung durch die Merkmale der unabhängigen Ansprüche gelöst. Vorteilhafte Weiterbildungen sind in den Unteransprüchen dargelegt.

Gemäss der Erfindung ist das Verankerungselement von einem die Durchführöffnung ausbildenden hülsenförmigen Grundkörper gebildet, von dessen Aussenseite die Verankerungsabschnitte nach aussen abragen, wobei jeder der Verankerungsabschnitte zumindest vier Seiten aufweist, wobei eine der Seiten eine Verbindungsseite des entsprechenden Verankerungsabschnitts, die mit dem Grundkörper verbunden ist, und zumindest die der Verbindungsseite gegenüberliegende Seite eine Reinigungsseite des entsprechenden Verankerungsabschnitts ausbildet, die zumindest eine Reinigungskante zur Reinigung der Wandung des Bohrlochs beim Einführen des Verankerungselementes in das Bohrloch aufweist.

Die Durchführöffnung für den Schaft wird von dem hülsenförmigen Grundkörper gebildet. Das Verankerungselement wird zumindest teilweise auf das Befestigungselement aufgeschoben und mit diesem zusammen in das Bohrloch eingeführt. Da zur Reinigung des Bohrlochs das Verankerungselement nicht mehr drehend in das Bohrloch eingeführt werden muss, sondern nur noch axial in Richtung der Längsachse des Bohrlochs eingeschoben wird, ist keine und insbesondere keine drehfeste Festlegung des Verankerungselementes am Befestigungselement erforderlich.

Die der Verbindungsseite des Verankerungselementes gegenüberliegende Reinigungsseite wird beim Einführen in das Bohrloch in Richtung des Bohrlochmunds verschwenkt, wobei jedoch zumindest eine Kante der Reinigungsseite als Reinigungskante entlang der Wandung des Bohrlochs streift und somit diese reinigt. Neben einem linearen Verlauf kann die Reinigungskante auch einen gebogenen, in Bezug auf den hülsenförmigen Grundkörper nach aussen ragenden, konvexen Verlauf aufweisen, der vorteilhaft eine dem Innenradius des Bohrlochs angenäherte Krümmung aufweist und somit eine vorteilhafte Reinigung der Wandung des Bohrlochs ermöglicht.

Vorteilhaft ist das Verankerungselement aus einem Metall, vorteilhaft aus einem Stahlblech gefertigt, womit das Verankerungselement eine ausreichende Steifigkeit aufweist. Eine einfache und wirtschaftliche Herstellung des Verankerungselementes lässt sich insbesondere mit einem Stanz-/Biegeverfahren gewährleisten.

Vorteilhaft ist der hülsenförmige Grundkörper aus einem Flachmaterial gefertigt und die Verankerungselemente werden mit einem Stanzwerkzeug in diesem Flachmaterial erzeugt sowie anschliessend nach aussen gebogen. Ein vorteilhaft geeignetes Stanzwerkzeug weist zumindest eine Schneide weniger als die Anzahl der Seiten des Verankerungselementes auf, so dass die nicht gestanzte Seite des Verankerungselementes dessen Verbindungsseite und Biegekante bildet.

In einer alternativen Ausführungsform ist das Verankerungselement aus einem Kunststoff, vorteilhaft aus einem faserverstärktem Kunststoff gefertigt. Eine einfache und wirtschaftliche Herstellung des Verankerungselementes lässt sich insbesondere mit einem Spritzgussverfahren gewährleisten.

In einer Alternative kann das Verankerungselement aus einem anderen Material als Metall oder Kunststoff gefertigt sein, sofern dieses Material eine ausreichende mechanische Verankerung eines Befestigungselementes im Bohrloch bis zum Aushärten der aushärtbaren Masse gewährleistet.

Der hülsenförmige Grundkörper weist im Querschnitt vorteilhaft eine auf den Schaft des Befestigungselementes abgestimmte Form auf und kann somit auch eine von einem Kreis abweichende Ausgestaltung aufweisen. Vorteilhaft umgibt der hülsenförmige Grundkörper im montierten Zustand den Schaft im Querschnitt konzentrisch und ist umfänglich zu diesem beabstandet, womit die aushärtbare Masse auch in den bereich zwischen Verankerungselement und den Schaft des Befestigungselementes eindringen kann. In einer alternativen Ausführung umgibt der hülsenförmige Grundkörper den Schaft in unterschiedlichen Abständen, so dass die Breite des Materialabschnitts zwischen der Aussenseite des Schafts und der inneren Wandung des hülsenförmigen Grundkörpers in Umfangrichtung variiert.

Die Verankerungsabschnitte sind vorteilhaft in einem regelmässigen Abstand in axialer wie auch in umlaufender Richtung zueinander angeordnet. Vorteilhaft sind die Verankerungsabschnitte entlang einer entlang der Innenkontur beziehungsweise entlang der Aussenkontur des hülsenförmigen Grundkörpers verlaufenden Schraubenlinie angeordnet. Diese Anordnung der Verankerungsabschnitte gewährleistet über die gesamte axiale Erstreckung des Verankerungselementes im gesetzten Zustand des Befestigungselementes mit einem derartigen Verankerungselement eine ausreichende Verankerung im Bohrloch bis die aushärtbare Masse für eine volle Belastung des gesetzten Befestigungselementes ausreichend ausgehärtet ist.

Vorzugsweise weist jeder der Verankerungsabschnitte eine gerade Anzahl von Seiten auf, so dass immer eine der Seiten der Verankerungsabschnitte die an der Wandung des Bohrlochs entlang streifende Reinigungsseite mit der Reinigungskante bildet.

Bevorzugt ist im Bereich eines Endes des Grundkörpers die Durchführöffnung zumindest teilweise verschlossen, so dass dieses Ende als Mitnehmeranschlag für den Schaft des Befestigungselementes dient. Dadurch wird das Verankerungselement beim Einführen in das Bohrloch bis auf die gewünschte Tiefe im Bohrloch von dem Befestigungselement mitgenommen.

Vorzugsweise umfasst der hülsenförmigen Grundkörper zumindest zwei Teile, die miteinander zum Grundkörper verbindbar sind, womit das Verankerungselement einfach an einer beliebigen Stelle des Schafts angeordnet werden kann. Insbesondere bei einem verhältnismässig langen Befestigungselement muss das Verankerungselement nicht entlang einer grossen axialen Länge über den Schaft geschoben werden. Anstelle von zwei, z. B. halbschalenförmigen Teilen kann der Grundkörper des Verankerungselementes auch von drei oder mehr Teilen gebildet sein, die entsprechend ihrer Ausgestaltung radial und/oder axial zum Grundkörper zusammengesetzt werden.

Erfindungsgemäß sind die Teile des Grundkörpers über zumindest ein Gelenk miteinander verbunden, womit die Teile eines Grundkörpers unverlierbar sind und ein einfaches Zusammenführen zu dem hülsenförmigen Grundkörper ermöglicht ist.

Weiter ist das zumindest eine Gelenk an einem axialen Endbereich der zumindest zwei Teile des Grundkörpers vorgesehen, so dass mittels Verschwenken der Teile zueinander der hülsenförmige Grundkörper gebildet wird.

Vorteilhaft sind zwei Teile vorgesehen, die weiter vorteilhaft als Halbschalen ausgebildet und die an einem axialen Endbereich über zwei einander gegenüberliegend angeordnete Gelenke miteinander verbunden sind. Das Befestigungselement wird durch die von den beiden Teilen geschaffene Öffnung hindurchgeführt. Nach dem Erreichen der gewünschten Position des Verankerungselementes am Schaft werden die beiden Teile zueinander verschwenkt, wobei die Teile beispielsweise mit dem Schaft in Eingriff kommen.

In einer bevorzugten Ausführung ist das zumindest eine Gelenk vorteilhaft an den axialen, zueinander benachbarten Längsseiten der zumindest zwei Teile des Grundkörpers vorgesehen, womit das Verankerungselement einfach an der gewünschten Stelle um den Schaft herumlegbar ist. Die zumindest zwei Teile werden zur Ausbildung des hülsenförmigen Grundkörpers zueinander hin verschwenkt beziehungsweise zueinander geklappt. Vorteilhaft sind zwei Teile vorgesehen, die weiter vorteilhaft als Halbschalen ausgebildet sind.

Vorteilhaft ist zumindest eine Verriegelungseinrichtung zum Verbinden der Teile zu dem hülsenförmigen Grundkörper vorgesehen, so dass sich die zusammengeführten Teile beim Setzen des Befestigungselementes nicht unbeabsichtigt öffnen. Die Verriegelungseinrichtung ist vorteilhaft als Schnappverbindung ausgebildet, die beispielsweise an einem Teil ein Rastelement und am anderen Teil, an der entsprechenden Position, ein Gegenrastelement umfasst.

Bevorzugt ist im hülsenförmigen Grundkörper zumindest eine Durchgangsöffnung für eine aushärtbare Masse vorgesehen, damit beim Einführen des Verankerungselements in ein zuvor befülltes Bohrloch der verdrängte Anteil der aushärtbaren Masse einfach das Verankerungselement durchdringen und dieses vollständig umhüllen kann. Wird das Bohrloch erst nach dem Einführen eines Befestigungselementes befüllt, kann durch die zumindest eine Durchgangsöffnung die eingegossene Masse weitgehend unbehindert bis zum Bohrlochgrund, zu dem Schaft und zur Wandung des Bohrlochs fliessen.

Vorzugsweise ist die Reinigungsseite beziehungsweise der äussere Umfang der Verankerungsabschnitte mit einer Profilierung versehen, welche eine einfache Anpassung des Verankerungselementes an die Ausgestaltung des Bohrlochs gewährleistet. Beispielsweise wird die Profilierung durch nach radial aussen offene Ausnehmungen gebildet. Die Ausnehmungen sind vorteilhaft als einseitig begrenzte Schlitze ausgebildet, die sich ausgehend von der Reinigungsseite beziehungsweise vom äusseren Umfang in Richtung des Grundkörpers erstrecken. Die zwischen den Ausnehmungen liegenden Abschnitte des Verankerungsabschnitts bilden leicht auslenkbare Lamellen aus, womit auch bei einem Verankerungselement aus einem sehr steifen Material die Anpassbarkeit an ein Bohrloch beim Einführen in dasselbe gegeben ist. Vorteilhaft sind unterschiedliche Arten von Ausnehmungen an der Reinigungsseite des Verankerungsabschnitts vorgesehen. Beispielsweise ist eine erste Art von Schlitzen vorgesehen, welche an der Reinigungsseite bewegliche Lamellen ausbilden, und zwischen diesen Schlitzen ist eine zweite Art von Schlitzen vorgesehen, welche den dazwischen liegenden Rand des Verankerungsabschnitts zusätzlich auffächern. Weiter kann die Profilierung durch zumindest eine, nach radial aussen offene Kerbe an der Reinigungsseite des Verankerungsabschnitts ausgebildet sein.

Vorteilhaft entspricht die Dicke der Verankerungsabschnitte der Wandungsstärke des hülsenförmigen Grundkörpers. Für eine vorteilhafte Verankerung der Verankerungsabschnitte an der Wandung des Bohrlochs beträgt die Dicke der Verankerungsabschnitte vorteilhaft 0.01 mm bis 2 mm, besonders vorteilhaft 0.05 mm bis 1 mm. Somit weist der hülsenförmigen Grundkörpers vorteilhaft ebenfalls eine Wandungsstärke auf, die vorteilhaft im Bereich von 0.01 mm bis 2 mm, besonders vorteilhaft 0.05 mm bis 1 mm liegt.

Weiter vorteilhaft weisen die Verankerungsabschnitte in einer von der Längsachse des Grundkörpers abragenden Ebene unterschiedliche Dicken auf, womit sich das Verformungsverhalten der Verankerungsabschnitte und somit des Verankerungselementes insbesondere beim Einführen in ein Bohrloch vorteilhaft anpassen lässt. In einer besonders vorteilhaften Ausführung nimmt die Dicke ausgehend von dem Grundkörper in radialer Richtung nach aussen beziehungsweise in Richtung der Reinigungsseite zu, so dass im Kontaktbereich des Verankerungselementes mit der Bohrlochwandung eine vorteilhaft grosse Materialmenge für eine mechanische Verankerung des Befestigungselementes zur Verfügung steht. In einer anderen vorteilhaften Ausführung nimmt die Dicke ausgehend von der Reinigungsseite in radialer Richtung zum Grundkörper hin zu, so dass in dem Verbindungsbereich der Verankerungselemente mit dem hülsenförmigen Grundkörper eine vorteilhaft grosse Materialmenge zur Verfügung steht. Weiter kann die Dicke der Verankerungsabschnitte auch einerseits ausgehend von dem Grundkörper in radialer Richtung nach aussen sowie andererseits ausgehend von der Reinigungsseite in radialer Richtung zum Grundkörper nach innen zunehmen, so dass der Bereich der Verankerungsabschnitte mit der grössten Materialdicke zwischen der Reinigungsseite und dem Grundkörper liegt.

Vorzugsweise sind zur Anordnung des Verankerungselementes an einem, insbesondere mit einer Aussenprofilierung versehenen, Schaft eines Befestigungselementes mehrere zueinander beabstandete, radial nach innen ragende Halteabschnitte zur Fixierung des Grundkörpers an dem Schafts vorgesehen, welche eine Beabstandung des Grundkörpers zum Schaft schaffen und gegebenenfalls eine verbesserte Fixierung des Verankerungselementes am Schaft des Befestigungselementes gewährleisten.

Der hülsenförmige Grundkörper weist im Querschnitt vorteilhaft eine auf den Schaft des Befestigungselementes abgestimmte Form auf und kann somit auch eine von einem Kreis abweichende Ausgestaltung aufweisen. Die Halteabschnitte schaffen einen Zwischenraum zwischen der Aussenseite des Schafts und der Innenseite des Grundkörpers, in den die aushärtbare Masse eindringen kann und somit nach deren Aushärten eine vorteilhafte Einbettung des Verankerungselementes gewährleistet ist. Vorteilhaft umgibt der hülsenförmige Grundkörper im montierten Zustand den Schaft im Querschnitt konzentrisch und ist umfänglich zu diesem beabstandet. In einer alternativen Ausführung umgibt der hülsenförmige Grundkörper den Schaft in unterschiedlichen Abständen, so dass die Breite des Materialabschnitts zwischen der Aussenseite des Schafts und der inneren Wandung des hülsenförmigen Grundkörpers in Umfangrichtung variiert.

In einer vorteilhaften Ausführung ist das Verankerungselement aus einem nicht leitenden Material gefertigt. In Anwendungen, in denen keine Ströme übertragen werden sollen, z. B. bei Befestigungen von Eisenbahnschwellen, gewährleistet das Verankerungselement mit den nach innen ragenden Halteabschnitten einen ausreichenden Abstand zwischen dem Schaft sowie der Bohrlochwandung und verhindert ein Fliessen von Strom von dem Bauteil in den Schaft des Befestigungselementes.

Da die Halteabschnitte des Verankerungselementes den Montagevorgang zu Beginn nicht behindern, lässt sich das Verankerungselement einfach entlang des Schafts verschieben und somit leicht positionieren.

Insbesondere bei einem Befestigungselement mit einer Aussenprofilierung ist diese Ausführung des Verankerungselementes vorteilhaft, da die nach innen ragenden Halteabschnitte im montierten Zustand in die Aussenprofilierung des Schafts des Befestigungselementes zumindest bereichsweise eingreifen und somit das Verankerungselement am Befestigungselement fixieren. Da die Halteabschnitte vorteilhaft nicht über den gesamten Umfang des Schafts verlaufen, lässt sich eine Steigung der Aussenprofilierung am Schaft ausgleichen, so dass das Verankerungselement im angeordneten Zustand im Wesentlichen parallel zur Längsachse des Schafts ausgerichtet ist. Eine Justierung eines zumindest ein Verankerungselement aufweisendes Befestigungselementes nach dem Setzen in einem Bohrloch erübrigt sich in den meisten Fällen beziehungsweise ist leicht vorzunehmen.

Die Halteabschnitte sind vorteilhaft in einem regelmässigen Abstand in axialer wie auch in umlaufender Richtung zueinander angeordnet. Vorteilhaft sind die Halteabschnitte entlang einer entlang der Innenkontur beziehungsweise entlang der Aussenkontur des hülsenförmigen Grundkörpers verlaufenden Schraubenlinie angeordnet. Diese Anordnung der Halteabschnitte gewährleistet über die gesamte axiale Erstreckung des Verankerungselementes im montierten Zustand einen Abstand des hülsenförmigen Grundkörpers zum Schaft. Zudem wird über die gesamte axiale Erstreckung des Verankerungselementes im gesetzten Zustand des Befestigungselementes eine ausreichende Verankerung im Bohrloch gewährleistet, bis die aushärtbare Masse für eine volle Belastung des gesetzten Befestigungselementes ausreichend ausgehärtet ist.

Besonders vorteilhaft sind die Halteabschnitte in axialer wie auch in umlaufender Richtung versetzt zu den Verankerungsabschnitten eines Verankerungselementes vorgesehen.

Bei einem hülsenförmigen Grundkörper aus einem Flachmaterial, z. B. aus einem Bandstahl, werden die Halteabschnitte wie auch die Verankerungselemente vorteilhaft mit einem Stanzwerkzeug in diesem Flachmaterial erzeugt sowie anschliessend nach innen gebogen. Ein vorteilhaft geeignetes Stanzwerkzeug weist zumindest eine Schneide weniger als die Anzahl der Seiten der Halteabschnitte auf, so dass die nicht gestanzte Seite des Halteabschnitte eine mit dem Grundkörper verbundene Verbindungsseite und Biegekante bildet. Die der Verbindungsseite gegenüberliegende Seite eines jeden Halteabschnitts bildet die Anlageseite des Halteabschnitts, welche im montierten Zustand des Verankerungselementes am Schaft des Befestigungselementes mit der Aussenseite des Schafts zumindest in Anlage kommt. Wird das Verankerungselement an einem Befestigungselement mit einem mit einer Aussenprofilierung versehenen Schaft vorgesehen, kommen die Anlageseiten der Halteabschnitte in Eingriff mit derselben.

Vorzugsweise ist die Anlageseite beziehungsweise der innere Umfang der Halteabschnitte mit einer Profilierung versehen, welche eine einfache Anpassung des Verankerungselementes an die Ausgestaltung des Schafts gewährleistet. Beispielsweise wird die Profilierung durch nach radial innen offener Ausnehmungen gebildet. Die Ausnehmungen sind vorteilhaft als einseitig begrenzte Schlitze ausgebildet, die sich ausgehend von der Anlageseite in Richtung des Grundkörpers erstrecken. Die zwischen den Ausnehmungen liegenden Abschnitte des Halteabschnitts bilden leicht auslenkbare Lamellen aus, womit auch bei einem Verankerungselement aus einem sehr steifen Material die Anpassbarkeit an den Schaft beim Anordnen des Verankerungselementes am Befestigungselement gegeben ist. Vorteilhaft sind unterschiedliche Arten von Ausnehmungen an der Anlageseite des Halteabschnitts vorgesehen. Beispielsweise ist eine erste Art von Schlitzen vorgesehen, welche an der Anlageseite bewegliche Lamellen ausbilden, und zwischen diesen Schlitzen ist eine zweite Art von Schlitzen vorgesehen, welche den dazwischen liegenden Rand des Halteabschnitts auffächern. Weiter kann die Profilierung durch zumindest eine, nach radial innen offener Kerbe an der Anlageseite des Halteabschnitts ausgebildet sein.

Vorteilhaft entspricht die Dicke der Halteabschnitte der Wandungsstärke des hülsenförmigen Grundkörpers. Für eine vorteilhafte Fixierung des Verankerungselementes an dem Schaft des Befestigungselementes beträgt die Dicke der Halteabschnitte vorteilhaft 0.01 mm bis 2 mm, besonders vorteilhaft 0.05 mm bis 1 mm.

Vorteilhaft weisen die Halteabschnitte in einer von der Längsachse des Grundkörpers abragenden Ebene unterschiedliche Dicken auf, womit sich das Verformungsverhalten der Halteabschnitte und somit des Verankerungselementes insbesondere beim Einführen in ein Bohrloch vorteilhaft anpassen lässt. In einer besonders vorteilhaften Ausführung nimmt die Dicke ausgehend von dem Grundkörper in radialer Richtung nach innen beziehungsweise in Richtung der Anlageseite der Halteabschnitte zu, so dass im Kontaktbereich des Verankerungselementes mit dem Schaft eine vorteilhaft grosse Materialmenge für eine mechanische Fixierung des Verankerungselementes am Schaft zur Verfügung steht. In einer anderen vorteilhaften Ausführung nimmt die Dicke der Halteabschnitte ausgehend von der Anlageseite in radialer Richtung zum Grundkörper zu. Weiter kann die Dicke der Halteabschnitte auch einerseits ausgehend von dem Grundkörper in radialer Richtung nach innen sowie andererseits ausgehend von der Anlageseite in radialer Richtung zum Grundkörper zunehmen, so dass der Bereich der Halteabschnitte mit der grössten Materialdicke zwischen der Anlageseite und dem Grundkörper liegt.

In einer Variante zu einer einteiligen Lösung des Verankerungselementes sind die Halteabschnitte und/oder die Verankerungsabschnitte als separate Teilelemente ausgebildet, welche an der Innenwandung beziehungsweise an der Aussenwandung des hülsenförmigen Grundkörpers angeordnet werden.

Die erfindungsgemässe, mittels einer aushärtbaren Masse in einem Bohrloch verankerbare Befestigungsvorrichtung weist ein Befestigungselement, das einen Schaft aufweist, und zumindest ein Verankerungselement auf, wie es zuvor dargelegt wurde. Das zumindest eine Verankerungselement des Befestigungselements kann einzelne sowie auch sämtliche Merkmale des zuvor beschriebenen Verankerungselementes aufweisen.

Diese Befestigungsvorrichtung lässt sich einfach herstellen und ermöglicht eine einfache Montage in einem Bohrloch eines Bauteils, wie z. B. in einer Wand oder einer Decke. Die Aussenprofilierung ist beispielsweise ein Gewinde.

Vorzugsweise sind mehrere Verankerungselemente beabstandet zueinander an einem Schaft des Befestigungselements vorgesehen, womit eine vorteilhafte mechanische Verankerung der Befestigungsvorrichtung, eine einfache Ausrichtung des Befestigungselementes im Bohrloch sowie eine vorteilhafte Bewehrung der ausgehärteten Masse gewährleistet ist. Vorteilhaft sind die mehreren Verankerungselemente in regelmässigen Abständen zueinander am Schaft angeordnet.

Bevorzugt sind verschiedene Ausgestaltungen von Verankerungselementen an einem Schaft vorgesehen, womit sich in verschiedenen Verankerungstiefen unterschiedliche Verankerungseigenschaften bedarfsweise miteinander kombinieren lassen. Beispielsweise werden hülsenförmige Verankerungselemente mit ringscheibenförmigen oder schraubenförmigen Verankerungselementen an einem Schaft kombiniert.

Die erfindungsgemässe Befestigungsanordnung zur Verankerung einer Befestigungsvorrichtung mittels einer aushärtbaren Masse in einem Bohrloch, das einen Nenndurchmesser aufweist, umfasst ein Befestigungselement mit einem Schaft sowie zumindest ein Verankerungselement, das einen Aussendurchmesser aufweist, der grösser als der Nenndurchmesser des Bohrlochs ist.

Beim Einführen des Befestigungselementes beziehungsweise der Befestigungsvorrichtung in das Bohrloch erfolgt durch das Streifen der Verankerungsabschnitte des Verankerungselementes entlang der Bohrlochwandung gleichzeitig eine Reinigung des Bohrlochs, wobei das anfallende Bohrmehl am Bohrlochgrund und gegebenenfalls in der aushärtbaren Masse gesammelt wird und nicht mehr zu einem grossen Teil in die Umgebungsluft entweicht. Eine separate Reinigung des Bohrlochs vor dem Setzen des Befestigungselementes ist nicht mehr erforderlich, wobei trotzdem hohe Endlasten mit der verankerten Befestigungsvorrichtung erreicht werden. Des Weiteren gewährleistet das zumindest eine Verankerungselement einen Spritzschutz beim Einführen des Befestigungselementes beziehungsweise der Befestigungsvorrichtung in das Bohrloch gegen herausspritzende aushärtbare Masse.

Durch den Wegfall des Reinigungsschritts wird die Anwendungssicherheit erhöht und das Setzen des Befestigungselementes beziehungsweise der Befestigungsvorrichtung beschleunigt. Es werden keine zusätzlichen Geräte benötigt und die Umgebungsluft wird nicht durch Bohrmehl zusätzlich belastet. Des Weiteren gewährleisten Befestigungselemente, insbesondere mit einem entsprechend lagen Verankerungselement beziehungsweise mit mehreren Verankerungselementen, eine ausreichende Überdeckung des Schafts entlang dessen gesamten Verankerungslänge mit der aushärtbaren Masse im Bohrloch.

Das zumindest eine Verankerungselement beziehungsweise das Befestigungselement wie auch die Befestigungsvorrichtung kann einzelne sowie auch sämtliche Merkmale des zuvor beschriebenen Verankerungselementes, des zuvor beschriebenen Befestigungselementes beziehungsweise der zuvor beschriebenen Befestigungsvorrichtung aufweisen.

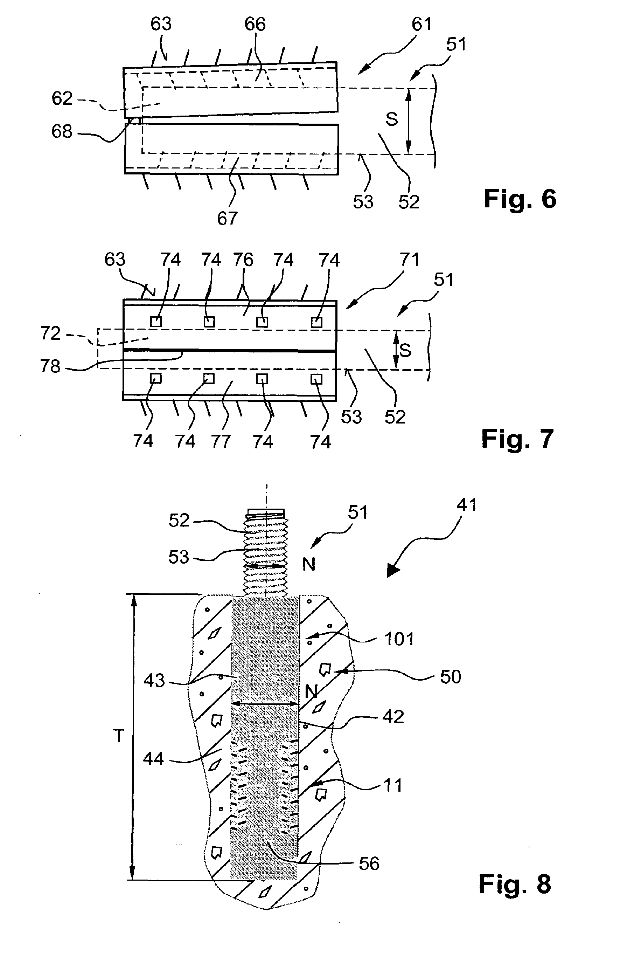

Die Erfindung wird nachstehend anhand von Figuren näher erläutert, wobei nur Fig. 6 und Fig. 7 Ausführungsformen der Erfindung zeigen. Die übrigen Figuren zeigen Beispiele, welche das verständnis der Erfindung erleichtern. Es zeigen:
- Fig. 1: Ein erstes Verankerungselement im Grundriss;
- Fig. 2: das Verankerungselement gem. Fig. 1 in einer Seitenansicht;
- Fig. 3: ein zweites Verankerungselement in Seitenansicht;
- Fig. 4: das Verankerungselement im Querschnitt gem. Linie III-III in Fig. 2;
- Fig. 5: ein drittes Verankerungselement im Querschnitt;
- Fig. 6: ein viertes erfindungsgemäßes Verankerungselement in Seitenansicht;
- Fig. 7: ein fünftes erfindungsgemäßes Verankerungselement in Seitenansicht; und
- Fig. 8: eine Befestigungsanordnung mit einem Befestigungselement im Schnitt.

Grundsätzlich sind in den Figuren gleiche Teile mit den gleichen Bezugszeichen versehen.

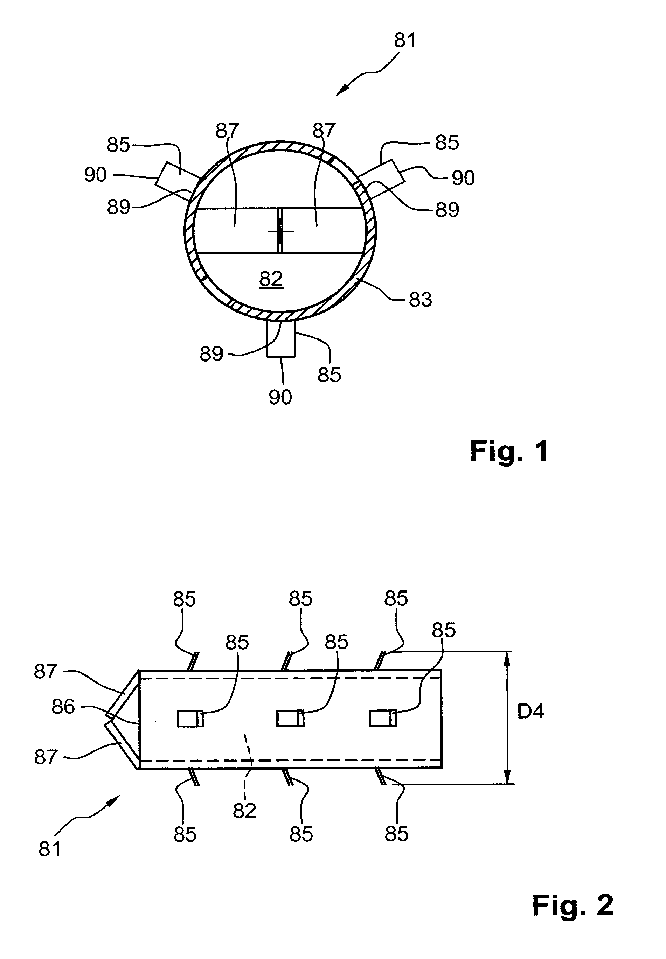

Das in den Figuren 1 und 2 dargestellte Verankerungselement 81 weist eine Durchführöffnung 82 für einen Schaft eines Befestigungselementes auf, welche von einem die Durchführöffnung 82 umgebenden hülsenförmigen Grundkörper 83 umgeben ist. Im Bereich eines Endes 86 des Grundkörpers 83 sind nach radial innen ragende Materialabschnitte 87 zum teilweisen Verschliessen der Durchführöffnung 82 im Bereich des Endes 86 vorgesehen.

Der hülsenförmige Grundkörper 83 weist mehrere zueinander beabstandete, radial nach aussen ragende Verankerungsabschnitte 85 zur Verankerung an einer Wandung eines Bohrlochs auf. Jeder der Verankerungsabschnitte 85 weist eine gerade Anzahl, in diesem Beispiel genau vier, Seiten auf. Eine der Seiten bildet eine Verbindungsseite 89 des entsprechenden Verankerungsabschnitts 85, die mit dem Grundkörper 83 verbunden ist, und die der Verbindungsseite 89 gegenüberliegende Seite bildet eine Reinigungsseite 90 des entsprechenden Verankerungsabschnitts 85 aus, die zumindest eine Reinigungskante zur Reinigung der Wandung des Bohrlochs beim Einführen des Verankerungselementes 81 in das Bohrloch aufweist.

Das Verankerungselement 81 weist einen Aussendurchmesser D4 auf. Das Verankerungselement 81 ist aus einem Metall, vorteilhaft aus einem Stahlblech, in einem Stanz-/Biegeverfahren gefertigt.

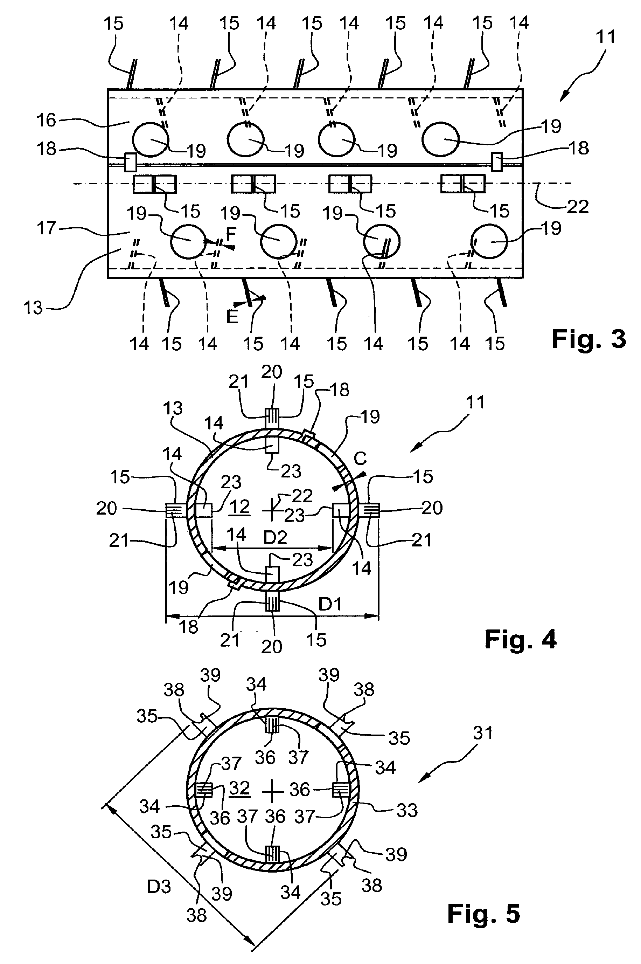

Der die Durchführöffnung 12 umgebende, hülsenförmige Grundkörper 13 des in den Figuren 3 und 4 dargestellten Verankerungselementes 11 umfasst im Gegensatz zu dem zuvor beschriebenen Grundkörper 83 des Verankerungselementes 81 zwei Teile 16 und 17, die mittels jeweils zweier, einander gegenüberliegenden Verriegelungseinrichtungen 18 zum hülsenförmigen Grundkörper 13 verbunden sind. Die Verriegelungseinrichtungen 18 sind jeweils als Schnappverbindungen ausgebildet.

Der hülsenförmige Grundkörper 13 weist mehrere zueinander beabstandete, radial nach innen ragende Halteabschnitte 14 zur Fixierung des Grundkörpers 13 an einer Aussenseite beziehungsweise an einer Aussenprofilierung des Schafts und mehrere zueinander beabstandete, radial nach aussen ragende Verankerungsabschnitte 15 zur Verankerung an einer Wandung eines Bohrlochs auf. Weiter sind im hülsenförmigen Grundkörper 13 mehrere Durchgangsöffnungen 19 für eine aushärtbare Masse vorgesehen.

Die Reinigungsseite 20 beziehungsweise der äussere Umfang der Verankerungsabschnitte 15 ist mit einer Profilierung in Form von mehreren, ausgehend von der Reinigungsseite 20 nach radial innen gerichtete Schlitze 21 vorgesehen, die jeweils den freien Rand der Verankerungsabschnitte 15 bereichsweise auffächern und somit eine einfache Anpassung desselben an die Wandung des Bohrlochs ermöglichen. Das Verankerungselement 11 weist einen Aussendurchmesser D1 auf. Die Verankerungsabschnitte 15 weisen in einer von der Längsachse 22 des Grundkörpers 13 abragenden Ebene unterschiedliche Dicken auf, wobei in diesem Ausführungsbeispiel die Dicke E ausgehend von dem Grundkörper 13 in radialer Richtung nach aussen beziehungsweise zur Reinigungsseite 20 hin zunimmt.

Die Halteabschnitte 14 weisen in einer von der Längsachse 22 des Grundkörpers 13 abragenden Ebene ebenfalls unterschiedliche Dicken auf, wobei in diesem Ausführungsbeispiel die Dicke F ausgehend von dem Grundkörper 13 in radialer Richtung nach innen beziehungsweise zur Anlageseite 23 hin zunimmt. Der radiale Abstand D2 zweier Halteabschnitte 14 zueinander ist kleiner als der Durchmesser des Schafts, an dem das Verankerungselement 11 angeordnet wird.

Das Verankerungselement 11 ist aus einem Metall, vorteilhaft aus einem Stahlblech, in einem Stanz-/Biegeverfahren gefertigt.

Das in der Figur 5 dargestellte Verankerungselement 31 weist ebenfalls einen eine Durchführöffnung 32 für einen Schaft umgebenden, hülsenförmigen Grundkörper 33 auf, an dem mehrere zueinander beabstandete, radial nach innen ragende Halteabschnitte 34 sowie mehrere zueinander beabstandete, radial nach aussen ragende Verankerungsabschnitte 35 vorgesehen sind. An der Reinigungsseite 38 beziehungsweise am äusseren Umfang der Verankerungsabschnitte 35 ist jeweils eine nach radial aussen offene Kerbe 39 als Profilierung vorgesehen. Zur Ausbildung von leicht auslenkbaren Lamellen beziehungsweise einer Profilierung an der Anlageseite 34 beziehungsweise am inneren Umfang der Halteabschnitte 34 sind mehrere, ausgehend von der Anlageseite 34 nach radial innen gerichtete Schlitze 37 vorgesehen, die jeweils den freien Rand der Halteabschnitte 34 bereichsweise auffächern und somit eine einfache Anpassung derselben an den Schaft des Befestigungselementes ermöglichen. Das Verankerungselement 31 weist einen Aussendurchmesser D3 auf.

In der Figur 6 ist ein Verankerungselement 61 aus zwei Teilen 66 und 67 dargestellt, die über ein Gelenk 68 an einem axialen Endbereich der Teile 66 und 67 zum hülsenförmigen Grundkörper 63 miteinander verbunden sind, so dass diese zueinander verschwenkbar sind.

In der Figur 7 ist ein Verankerungselement 71 aus zwei Halbschalen 76 und 77 dargestellt, die über ein an einer der einander gegenüberliegenden axialen Längsseiten angeordnetes Gelenk 78 zum hülsenförmigen Grundkörper 73 miteinander verbunden sind, so dass diese zueinander verschwenkbar sind. Die Halteabschnitte 74 an den Halbschalen 76 und 77 greifen erst nach dem Zusammenführen der Halbschalen 76 und 77 zu dem hülsenförmigen Grundkörper 73 in die Aussenprofilierung 53 des Schafts 52 des Befestigungselementes 51 ein.

In der Figur 8 ist eine Befestigungsanordnung 41 zur Verankerung einer Befestigungsvorrichtung 50 in einem Bohrloch 42 mittels einer aushärtbaren Masse 43 gezeigt.

Die Befestigungsvorrichtung 50 umfasst ein Befestigungselement 51 mit einem Schaft 52, der mit einem Aussengewinde als Aussenprofilierung 53 versehen ist sowie einen Durchmesser S aufweist, und zwei Arten von Verankerungselementen 11 und 101, die am Schaft 52 des Befestigungselementes 51 angeordnet sind. Die Verankerungselemente 101 sind ringscheibenförmig ausgebildet und in regelmässigen Abständen zueinander am Schaft 52 angeordnet. Das Verankerungselement 11 mit dem hülsenförmigen Grundkörper 13 ist am setzrichtungsseitigen Ende 56 des Schafts 52 vorgesehen. Anstelle von verschiedenen Verankerungselementen 11 und 101 können auch mehrere, gleichartige Verankerungselemente 11 an einem Schaft 52 des Befestigungselementes 51 vorgesehen sein. Dies stellt eine einfache Anpassung des Befestigungselementes 51 an örtliche Gegebenheiten sicher. Bei der Anordnung des Verankerungselementes 11 werden die Halteabschnitte 14 ausgelenkt. Anschliessend greifen die Halteabschnitte 14 mit ihren freien Enden in die Aussenprofilierung 53 ein und fixieren das Verankerungselement 11 am Schaft 52 des Befestigungselementes 51. Die Verankerungselemente 11 und 101 sind beispielsweise auf den Schaft 52 aufgeschoben oder werden z. B. auf diesen aufgeschraubt.

Anstelle unterschiedlicher Verankerungselemente 11 und 101 können auch mehrere gleichartige Verankerungselemente an einem Schaft vorgesehen sein. In Abhängigkeit der Anforderungen an das gesetzte Befestigungselement kann auch nur ein Verankerungselement an dem Schaft des Befestigungselementes vorgesehen sein.

Zum Setzen der Befestigungsvorrichtung 50 beziehungsweise des Befestigungselementes 51 wird in dem Bauteil 44 zuerst ein Bohrloch 42 mit einem Bohrer erstellt, wobei der Nenndurchmesser N des erstellten Bohrlochs 42 kleiner als der Aussendurchmesser D1 des Verankerungselementes 11 sowie kleiner als der Aussendurchmesser der Verankerungselemente 101 gewählt ist. Die Bohrlochtiefe T wird einerseits durch die erforderliche Verankerungslänge für das Befestigungselement 51 und andererseits durch den erforderlichen Raum vor dem Befestigungselement 51 zur Aufnahme von Bohrmehl im Bohrloch 42 bestimmt.

Anschliessend wird das Bohrloch 42 mit einer definierten Menge der aushärtbaren Masse 43 befüllt und dann das Befestigungselement 51 mit dem setzrichtungsseitigen Ende 56 des Schafts 52 voran in das Bohrloch 42 eingeführt, wobei das Einführen manuell oder auch maschinell erfolgt. Dabei streifen die Verankerungsabschnitte 15 des am Schaft 52 des Befestigungselementes 51 angeordneten Verankerungselementes 11 entlang der Bohrlochwandung, so dass daran anhaftendes Bohrmehl zum grössten Teil von diesen entfernt und in die aushärtbare Masse 43 eingemischt beziehungsweise zum Bohrlochgrund hin bewegt wird. Beim Einführen des Befestigungselementes 51 durchströmt und umspült die aushärtbare Masse 43 das Verankerungselement 11 durch die Durchgangsöffnungen 19 im hülsenförmigen Grundkörper 13, so dass die aushärtbare Masse 43 und allenfalls darin befindliches Bohrmehl gleichmässig durchmischt wird und das Verankerungselement 11 nach dem Aushärten der Masse 43 weitgehend vollständig in dieser eingebettet sind.

Alternativ wird zuerst das Befestigungselement 51 in das Bohrloch 42 eingeführt und anschliessend die aushärtbare Masse 43 eingebracht. In einer weiteren Alternative wird zuerst eine kleine, bestimmte Menge der aushärtbaren Masse 43 in das Bohrloch 42 eingebracht, das Befestigungselement 51 in das Bohrloch 42 eingeführt und anschliessend ein noch verbleibender Freiraum des Bohrlochs 42 mit einer weiteren Menge der aushärtbaren Masse 43 aufgefüllt.

Weiter kann der Schaft 52 mit einer Injektionsbohrung versehen sein, durch welche die aushärtbare Masse 43 nach dem Einführen oder während demselben in das Bohrloch 42 einbringbar ist.

Vor dem Aushärten der aushärtbaren Masse 43 ist das Befestigungselement 51 bereits auf einem beschränkten Lastniveau belastbar, da zumindest das Verankerungselement 11 das Befestigungselement 51 mechanisch im Bohrloch 42 verankert. Nach dem Aushärten der aushärtbaren Masse 43 ist das gesetzte Befestigungselement 51 auf das maximal zulässige Lastniveau belastbar.

Da die Reinigungsseite 20 der Verankerungsabschnitte 15 weiterhin zumindest bereichsweise in die Bohrlochwandung eingreift, steht eine ausreichende Kontaktfläche zur Verfügung, womit die Befestigungsanordnung 41 auch in gerissenem Beton anwendbar ist.

Da die Verankerungsabschnitte 15 wie auch die Halteabschnitte 14 im gesetzten Zustand vollständig von der aushärtbaren Masse 43 umgeben sind, ist auch bei einer geringen Materialdicke E bzw. F ein Ausknicken derselben unter Last bereits vor dem vollständigen Aushärten der aushärtbaren Masse 43 verhindert.

## Patentansprüche

1. Verankerungselement (11; 31; 61; 71; 81) zur Anordnung an einem Schaft (52) eines Befestigungselementes (51) mit einer Durchführöffnung (12; 32; 62; 72; 82) für den Schaft (52) und mit Verankerungsabschnitten (15; 35; 85) zur Verankerung an einer Wandung eines Bohrlochs (42), mit
einen die Durchführöffnung (12; 32; 62; 72; 82) ausbildenden hülsenförmigen Grundkörper (13; 33; 63; 73; 83), von dessen Aussenseite die Verankerungsabschnitte (15; 35; 85) nach aussen abragen, wobei
jeder der Verankerungsabschnitte (15; 35; 85) zumindest vier Seiten aufweist, wobei eine der Seiten eine Verbindungsseite (89) des entsprechenden Verankerungsabschnitts (15; 35; 85), die mit dem Grundkörper (13; 33; 63; 73; 83) verbunden ist, und zumindest die der Verbindungsseite (89) gegenüberliegende Seite eine Reinigungsseite (90) des entsprechenden Verankerungsabschnitts (15; 35; 85) ausbildet, die zumindest eine Reinigungskante zur Reinigung der Wandung des Bohrlochs (42) beim Einführen des Verankerungselementes (11; 31; 61; 71; 81) in das Bohrloch (42) aufweist, **dadurch gekennzeichnet, dass** der hülsenförmige Grundkörper (13; 63; 73) zumindest zwei Teile (16, 17; 66, 67; 76, 77) umfasst, die zum hülsenförmigen Grundkörper (13; 63; 73) miteinander verbindbar sind, wobei die Teile (66, 67; 76, 77) des Grundkörpers (63; 73) über zumindest ein Gelenk (68; 78) miteinander verbunden sind, das an einem axialen Endbereich der zumindest zwei Teile (66, 67) des Grundkörpers (63) vorgesehen ist.

2. Verankerungselement nach Anspruch 1, **dadurch gekennzeichnet, dass** das zumindest eine Gelenk (78) an einer der axialen Längsseiten der zumindest zwei Teile (76, 77) des Grundkörpers (73) vorgesehen ist.

3. Verankerungselement nach Anspruch 1 oder 2, **dadurch gekennzeichnet, dass** jeder der Verankerungsabschnitte (15; 35; 85) eine gerade Anzahl von Seiten aufweist.

4. Verankerungselement nach einem der Ansprüche 1 bis 3, **dadurch gekennzeichnet, dass** im Bereich eines Endes (86) des Grundkörpers (83) die Durchführöffnung (82) zumindest teilweise verschlossen ist.

5. Verankerungselement nach einem der Ansprüche 1 bis 4, **dadurch gekennzeichnet, dass** im hülsenförmigen Grundkörper (13) zumindest eine Durchgangsöffnung (19) für eine aushärtbare Masse (43) vorgesehen ist.

6. Verankerungselement nach einem der Ansprüche 1 bis 5, **dadurch gekennzeichnet, dass** eine Reinigungsseite (20; 38; 90) der Verankerungsabschnitte (15; 35; 85) mit einer Profilierung versehen ist.

7. Verankerungselement nach einem der Ansprüche 1 bis 6, **dadurch gekennzeichnet, dass** zur Anordnung des Verankerungselementes an einem, insbesondere mit einer Aussenprofilierung (53) versehenen, Schaft (52) eines Befestigungselementes (51) mehrere zueinander beabstandete, radial nach innen ragende Halteabschnitte (14; 34) zur Fixierung des Grundkörpers (13; 33; 63; 73) an der Aussenprofilierung (53) des Schafts (52) vorgesehen sind.

8. Verankerungselement nach einem der Ansprüche 1 bis 7, **dadurch gekennzeichnet, dass** eine Anlageseite (36) der Halteabschnitte (34) mit einer Profilierung versehen ist.

9. Befestigungsvorrichtung, die mittels einer aushärtbaren Masse (43) in einem Bohrloch (42) verankerbar ist, mit einem Befestigungselement (51), das einen Schaft (52) aufweist und mit zumindest einem Verankerungselement (11) nach einem der Ansprüche 1 bis 8.

10. Befestigungsvorrichtung nach Anspruch 9, **dadurch gekennzeichnet, dass** mehrere Verankerungselemente (11, 101) beabstandet zueinander an einem Schaft (52) vorgesehen sind.

11. Befestigungsvorrichtung nach einem der Ansprüche 9 bis 10, **dadurch gekennzeichnet, dass** verschiedene Ausgestaltungen von Verankerungselementen (11, 101) an einem Schaft (52) vorgesehen sind.

12. Befestigungsanordnung (41) zur Verankerung einer Befestigungsvorrichtung (50) nach einem der Ansprüche 9 bis 10 mittels einer aushärtbaren Masse (43) in einem Bohrloch (42), das einen Nenndurchmesser (N) aufweist, wobei das zumindest eine an dem Befestigungselement (51) angeordnete Verankerungselement (11) einen Aussendurchmesser (D1) aufweist, der grösser als der Nenndurchmesser (N) des Bohrlochs (42) ist.

## Claims

1. An anchoring element (11; 31; 61; 71; 81) for placement on a shank (52) of a fastener (51), said anchoring element (11; 31; 61; 71; 81) having a lead-through opening (12; 32; 62; 72; 82) for the shank (52) and anchoring portions (15; 35; 85) for anchoring it to the wall of a drilled hole (42), comprising
a sleeve-like base component (13; 33; 63; 73; 83) forming the lead-through opening (12; 32; 62; 72; 82), the anchoring portions (15; 35; 85) projecting outwardly from the outside of said base component (13; 33; 63; 73; 83), and
each of the anchoring portions (15; 35; 85) having at least four sides, one of the sides forming a connecting side (89) of the respective anchoring portion (15; 35; 85) which is connected to the base component (13; 33; 63; 73; 83), and at least the side lying opposite the connecting side (89) forming a cleaning side (90) of the respective anchoring portion (15; 35; 85) which has at least one cleaning edge for cleaning the wall of the drilled hole (42) upon insertion of the anchoring element (11; 31; 61; 71; 81) into the drilled hole (42), **characterized in that** the sleeve-like base component (13; 63; 73) is made up of at least two parts (16, 17; 66, 67; 76, 77) which can be joined together to form said sleeve-like base component (13; 63; 73), the parts (66, 67; 76, 77) of the base component (63; 73) being joined together by means of at least one joint (68; 78) which is provided at an axial end of the at least two parts (66, 67) of the base component (63).

2. An anchoring element according to Claim 1, **characterized in that** the at least one joint (78) is provided on one of the axial longitudinal sides of the at least two parts (76, 77) of the base component (73).

3. An anchoring element according to Claim 1 or 2, **characterized in that** each of the anchoring portions (15; 35; 85) has an even number of sides.

4. An anchoring element according to one of Claims 1 to 3, **characterized in that** the lead-through opening (82) is at least partly closed in the region of one end (86) of the base component (83).

5. An anchoring element according to one of Claims 1 to 4, **characterized in that** at least one through opening (19) for a hardenable substance (43) is provided in the sleeve-like base component (13).

6. An anchoring element according to one of Claims 1 to 5, **characterized in that** a cleaning side (20; 38; 90) of the anchoring portions (15; 35; 85) is provided with a profile.

7. An anchoring element according to one of Claims 1 to 6, **characterized in that**, for placement of the anchoring element on a shank (52) of a fastener (51) which has specifically been provided with an external profile (53), a plurality of retaining portions (14; 34), spaced apart from one another and projecting radially inwards, are provided for fixing the base component (13; 33; 63; 73) to the external profile (53) of the shank (52).

8. An anchoring element according to one of Claims 1 to 7, **characterized in that** a contact side (36) of the retaining portions (34) is provided with a profile.

9. A fastening device, which can be anchored in a drilled hole (42) by means of a hardenable substance (43), comprising a fastener (51) having a shank (52) and including at least one anchoring element (11) according to one of Claims 1 to 8.

10. A fastening device according to Claim 9, **characterized in that** a plurality of anchoring elements (11, 101), spaced apart from one another, are provided on a shank (52).

11. A fastening device according to one of Claims 9 or 10, **characterized in that** different configurations of anchoring element (11, 101) are provided on a shank (52).

12. A fastening arrangement (41) for anchoring a fastening device (50) according to one of Claims 9 or 10 by means of a hardenable substance (43) in a drilled hole (42) which has a nominal diameter (N), in which case the at least one anchoring element (11) placed on the fastener (51) has an outer diameter (D1) which is larger than the nominal diameter (N) of the drilled hole (42).

## Revendications

1. Elément d'ancrage (11 ; 31 ; 61 ; 71 ; 81) destiné à être monté sur une tige (52) d'un élément de fixation (51) ayant une ouverture traversante (12 ; 32 ; 62 ; 72 ; 82) pour la tige (52) et des portions d'ancrage (15 ; 35 ; 85) pour un ancrage sur une paroi d'un trou de perçage (42),
comportant un corps de base (13 ; 33 ; 63 ; 73 ; 83) en forme de douille formant l'ouverture traversante (12 ; 32 ; 62 ; 72 ; 82), les portions d'ancrage (15 ; 35 ; 85) faisant saillie vers l'extérieur à partir du côté extérieur du corps de base,
dans lequel chacune des portions d'ancrage (15 ; 35 ; 85) comporte au moins quatre côtés, l'un des côtés formant un côté de liaison (89) de la portion d'ancrage (15 ; 35 ; 85) correspondante, qui est relié au corps de base (13 ; 33 ; 63 ; 73 ; 83), et au moins le côté opposé au côté de liaison (89) formant un côté de nettoyage (90) de la portion d'ancrage (15 ; 35 ; 85) correspondante, qui comporte au moins un bord de nettoyage pour nettoyer la paroi du trou de perçage (42) lors de l'introduction de l'élément d'ancrage (11 ; 31 ; 61 ; 71 ; 81) dans le trou de perçage (42), **caractérisé en ce que** le corps de base (13 ; 63 ; 73) en forme de douille inclut au moins deux parties (16, 17 ; 66, 67 ; 76, 77) qui peuvent être reliées l'une à l'autre pour former le corps de base en forme de douille (13 ; 63 ; 73), les parties (66, 67 ; 76, 77) du corps de base (63 ; 73) étant reliées l'une à l'autre par l'intermédiaire d'au moins une articulation (68 ; 78) qui est prévue sur une zone d'extrémité axiale des au moins deux parties (66, 67) du corps de base (63).

2. Elément d'ancrage selon la revendication 1, **caractérisé en ce que** la au moins une articulation (78) est prévue sur l'un des côtés longitudinaux axiaux des au moins deux parties (76, 77) du corps de base (73).

3. Elément d'ancrage selon la revendication 1 ou 2, **caractérisé en ce que** chacune des portions d'ancrage (15 ; 35 ; 85) a un nombre de côtés pair.

4. Elément d'ancrage selon l'une des revendications 1 à 3, **caractérisé en ce que** l'ouverture traversante (82) est fermée au moins partiellement dans la zone d'une extrémité (86) du corps de base (83).

5. Elément d'ancrage selon l'une des revendications 1 à 4, **caractérisé en ce qu'**au moins une ouverture traversante (19) pour une masse durcissable (43) est prévue dans le corps de base en forme de douille (13).

6. Elément d'ancrage selon l'une des revendications 1 à 5, **caractérisé en ce qu'**un côté de nettoyage (20 ; 38 ; 90) des portions d'ancrage (13 ; 35 ; 85) est pourvu d'un profil.

7. Elément d'ancrage selon l'une des revendications 1 à 6, **caractérisé en ce que** pour l'agencement de l'élément d'ancrage sur une tige (52) d'un élément de fixation (51), en particulier pourvu d'un profil extérieur (53), sont prévues plusieurs portions de retenue (14 ; 34) faisant radialement saillie vers l'intérieur et espacées les unes des autres pour fixer le corps de base (13 ; 33 ; 63 ; 73) sur le profil extérieur (53) de la tige (52).

8. Elément d'ancrage selon l'une des revendications 1 à 7, **caractérisé en ce qu'**un côté d'appui (36) des portions de retenue (34) est muni d'un profil.

9. Dispositif de fixation qui peut être ancré dans un trou de perçage (42) au moyen d'une masse durcissable (43), avec un élément de fixation (51) qui comporte une tige (52) et au moins un élément d'ancrage (11) selon l'une des revendications 1 à 8.

10. Dispositif de fixation selon la revendication 9, **caractérisé en ce que** plusieurs éléments d'ancrage (11, 101) sont prévus espacés les uns des autres, sur une tige (52).

11. Dispositif de fixation selon l'une des revendications 9 à 10, **caractérisé en ce que** différents agencements d'éléments d'ancrage (11, 101) sont prévus sur une tige (52).

12. Agencement de fixation (41) pour ancrer un dispositif de fixation (50) selon l'une des revendications 9 à 10 au moyen d'une masse durcissable (43) dans un trou de perçage (42) ayant un diamètre nominal (N), dans lequel le au moins un élément d'ancrage (11) agencé sur l'élément de fixation (51) a un diamètre extérieur (D1) qui est plus grand que le diamètre nominal (N) du trou de perçage (42).
